# EUROPEAN PATENT SPECIFICATION

(11) **EP 0 474 052 B1**
(45) Date of publication and mention of the grant of the patent: **06.11.1996**
(21) Application number: 91114108.3
(22) Date of filing: 22.08.1991
(51) Int. Cl.: G11B 21/08, G11B 20/12

(54) **Zone access method in an optical disk drive apparatus**
Verfahren des Bereichszugriffs in einem Gerät zur optischen Wiedergabe von Platten
Procédé d'accès aux zones dans un appareil de reproduction de disques optiques

(30) Priority: 22.08.1990 JP 220593/90; 23.08.1990 JP 221940/90; 24.08.1990 JP 223815/90; 03.09.1990 JP 232954/90; 30.05.1991 JP 127540/91
(43) Date of publication of application: 11.03.1992
(73) Proprietor: SEIKO EPSON CORPORATION, Shinjuku-ku Tokyo-to (JP)
(72) Inventor: Yasukawa, Masaaki, c/o Seiko Epson Corp., Suwa-shi, Nagano-ken (JP)
(74) Representative: Hoffmann, Eckart, Dipl.-Ing.

(56) References cited:
- WO-A-91/01554
- US-A- 4 488 189
- US-A- 4 536 863
- US-A- 4 896 311

## Description

The present invention relates to a method of accessing an optical disk in an optical disk drive apparatus and more particularly to a method of determining the required reference synchronizing frequency of the drive circuit of the drive apparatus at the time of a zone miss occurring during a seek operation with an optical disk drive apparatus that uses a storage medium partitioned into plural zones of different data recording frequencies.

A method now being used for increasing the recording capacity of optical and optical-magnetic disk drive apparatus is the modified constant angular velocity method (MCAV method) in which the storage medium is partitioned into a number of concentric circular zones, the recording frequency of the recorded data is made different in respective zones and the line density of the recording data is uniform over the entire surface of the medium. This method has the advantage that it allows a high capacity to be easily achieved by switching the reference synchronizing frequency of a frequency synchronizing circuit (hereinafter referred to as PLL circuit) to the data recording frequency of the zone in which the head is currently positioned.

On the other hand, it is difficult to move the head to a target or object track by a single seek operation because of the high track density which in optical disk drive apparatus is about ten times higher than that in magnetic disk drive apparatus. Therefore, most optical disk drive apparatus adopt a two stage seek operation which consist of a rough seek that moves the head to the vicinity of the object track and a fine seek that positions the head precisely on the object track. In such two stage seek operation the following steps are performed:
(1) Reference a conversion table in a ROM (Read Only Memory) of the disk drive apparatus to find the object zone to which the object track belongs,
(2) read the address of the track on which the head is presently positioned and calculate the distance to the object track,
(3) set the reference synchronizing frequency of the drive circuit to the data recording frequency of the object zone,
(4) move the head to the vicinity of the object track by a rough seek,
(5) read the address of the track on which the head is positioned after the rough seek and calculate the error relative to the object track, and
(6) carry out a fine seek based on the calculated error.

The accuracy of the rough seek in optical disk drive apparatus is generally from several tracks to several tens of tracks. If the object track is in the vicinity of a zone boundary, a so called zone miss phenomenon may occur, that is after the rough seek the head is not in the object zone but has moved to an adjoining zone. In such case the reference synchronizing frequency which has been set in step (3) above differs from the data recording frequency of the (adjoining) zone where the head is actually positioned after the rough seek. Since the drive circuit cannot synchronize the two frequencies the track address of the present track cannot be read. Where the drive circuit cannot read the track address it cannot determine the zone in which the head is. Consequently, there is no possibility to know what reference synchronizing frequency would correspond to the data recording frequency of the present zone.

To overcome this problem when a zone miss occurs, an inefficient zone access processing is carried out in the prior art as follows:
(1) Increment (or decrement) the zone address setting of the drive circuit by 1,
(2) switch the reference synchronizing frequency to the data recording frequency of the newly set zone address,
(3) try reading of the track address again,
(4) when the track address cannot be read, repeat (1), (2) and (3) and
(5) when the zone address setting of the drive circuit reaches the highest zone address (or the address zero) of the storage medium, change the zone address setting to zero (or to the highest zone address) and return to (2).

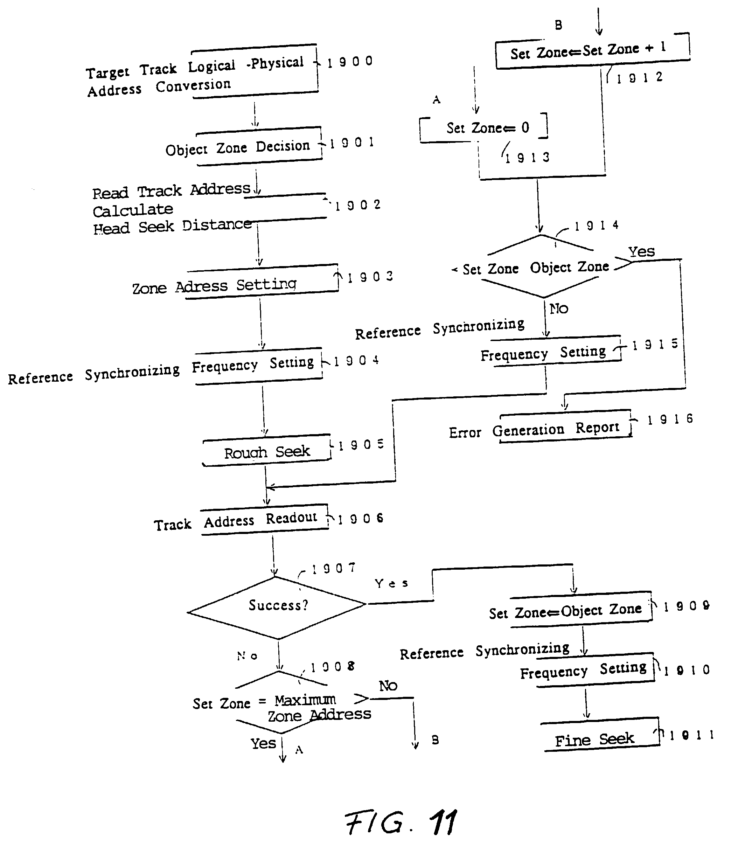

Fig. 11 is a flow chart of this prior art zone access method. At 1900 in Fig. 11 the logical address of the seek object sector of a command coming from a host computer is converted to the physical address. At 1901 the object zone address corresponding to said physical address is obtained for instance by referencing a physical track address/zone parameter table prerecorded in the ROM of the optical disk drive apparatus. At 1902, the track address of the track where the head is presently positioned is read as a preparatory stage for a rough seek. The difference between this present track address and the physical track of the seek destination calculated in the previous step is computed to obtain the head seek distance needed for later rough seek. At 1903, the zone address setting of the drive circuit of the disk drive apparatus is switched to the said object zone address, and at 1904 the reference synchronizing frequency of the drive circuit is set to the data recording frequency of the object zone obtained at 1901. Step 1905 is the rough seek to move the head to the vicinity of the object track based on the head seek distance computed at 1902. At 1906 the address of the track where the head is positioned after the rough seek is read out. At 1907, the result of the track address reading is tested. If the reading is judged to be successful, the zone setting and the reference synchronizing frequency of the drive circuit are set again to the object zone and the data recording frequency of this object zone at 1909 and 1910, respectively, and the fine seek is started at 1911. If, however, the reading is judged to be unsuccessful at 1907, the drive circuit checks at 1908 whether or not the present zone setting in the drive circuit is the maximum zone address on the medium. If so, the zone address in drive circuit is set to zero at 1913. If the zone address has not the maximum value at 1908, the zone address is incremented by 1 at 1912. At 1914, the new zone address setting in the drive circuit is tested to find out if it returned to the initial zone address at the start of zone access process. When it did return, a medium error generation report processing is done at 1916. When it did not return, then at 1915 the reference synchronizing frequency of the drive circuit is set to the data recording frequency of the zone that was newly set at 1912 or 1913 and the process returns to the track address reading step 1906.

Although the above described prior art zone access processing can be performed using simple algorithms, it does not take into consideration any information about the condition under which a zone miss error happened and always switches the reference synchronizing frequency of the drive circuit in one direction. Consequently, when the head is in an adjoining zone because of a zone miss and the zone switching direction is just opposite it would take a very long time for the drive circuit to get to a proper reference synchronizing frequency. This markedly decreases the processing speed of the disk drive apparatus to the host computer.

There are also other means for preventing zone miss phenomena, including the method of furnishing an additional zone in the boundary region between adjacent zones and prerecording the track address in this additional zone with two different data recording frequencies respectively corresponding to the data recording frequencies of the two adjacent zones (JP-A-02-189769 and JP-A- 02-189742), and the method of dividing each zone into a data region and a buffer region on each side of the data region, the buffer regions being sufficiently larger than the estimated seek error (JP-A-02-183475). These methods are effective in cases where there are comparatively small seek errors. However, where the track address information must be prerecorded on the medium with two different frequencies, the mastering of the medium becomes difficult and cost increases are inevitable. Also, the PLL circuit of the optical disk drive apparatus becomes complicated, thereby also contributing to an increase of costs. Furthermore, both of the two methods are incompatible with the MCAV media which are now on the market, which is a great disadvantage. An additional disadvantage of the method based on zones divided into a data region and buffer regions is that the data recording area of the medium is drastically diminished because of the buffer regions by which the capacity per one medium is reduced.

The present invention is intended to remedy the explained drawbacks of the prior art and its object is to provide a zone access method that allows a quick recover from a zone miss phenomenon and is capable of using the MCAV media available on the market, without sacrificing the recording capacity of the MCAV media.

This object is achieved with a method as claimed in claims 1 to 3, respectively.

Embodiments of the present invention will be explained in detail below with reference to the drawings, in which
- Fig. 1: is a flow chart of a zone access method according to a first embodiment of the present invention,
- Fig. 2: is a flow chart of an example of the zone access precedence decision processing of the first embodiment,
- Fig. 3: is a flow chart of another example of the zone access precedence decision processing of the first embodiment,
- Fig. 4: is a flow chart of a zone access method according to a second embodiment of the present invention,
- Fig. 5: is a flow chart of an example of the zone access precedence decision processing of the second embodiment,
- Fig. 6: is a flow chart of another example of the zone access precedence decision processing of the second embodiment,
- Fig. 7: is a flow chart of still another example of the zone access precedence decision processing of the second embodiment of the present invention,
- Fig. 8: is a flow chart of a historic variable update processing,
- Fig. 9: is a flow chart of a zone access method according to a third embodiment of the present invention,
- Fig. 10: is a flow chart of a track inquiry processing for the third embodiment, and
- Fig. 11: is a flow chart of a prior art zone access method.

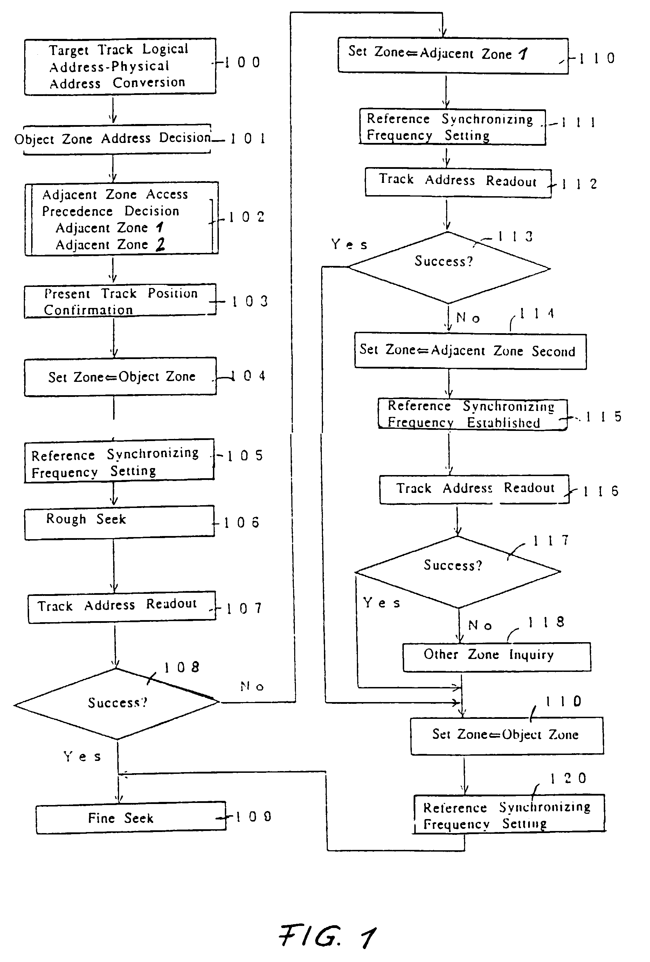

Fig. 1 is a flow chart of a zone access method according to a first embodiment of the invention.

In Fig. 1, at 100 the logical address of the seek object sector of a command sent from the host computer is converted to the physical address depending on the optical disk drive apparatus configuration. This physical address is conventionally calculated based on the number of heads in the disk drive apparatus, the number of sectors per track and the number of defective sectors on the storage medium, and it consists of the physical track address and the physical sector address. At 101, the object zone address associated with the physical track address is determined. This can be done for example by referencing a zone parameter table prerecorded in a ROM of the disk drive apparatus. At 102, the zone access precedence of the two zones adjacent to the object zone whose address was obtained at 101, namely the inner adjacent zone and the outer adjacent zone is determined in a way that will be explained later. At 103, the track address where the head is presently positioned is read as a preparatory step for seek operation. The difference between the thus read track address and the physical track address of the seek destination previously calculated is computed to obtain the distance the head is required to be moved for the seek.

At 104, the zone address of the drive circuit of the optical disk drive apparatus is set to said object zone address, and at 105 the reference synchronizing frequency of the drive circuit is switched to the data recording frequency corresponding to the zone whose address was set at 104. At 106, the head does a rough seek to the vicinity of the object track based on the seek distance computed at 103. At 107, the address of the track where the head is positioned after the rough seek is read out. In order for that to be successful the data recording frequency of the track must match the reference synchronizing frequency of the drive circuit, and it is necessary to detect the sector mark and address mark and read out the track address within a predetermined time. After the rough seek, there is ordinarily an error of several tracks to several tens of tracks between the object track and the track where the head is positioned (hereinafter called the virtual object track). If the virtual object track is in the same zone as the object track, it will be possible to read out the track address since the data recording frequency of the virtual object track coincides with the reference synchronizing frequency of the drive circuit that was set at 105. However, if the object track of the seek designation is in the vicinity of a zone boundary, there is the possibility that the virtual object track will not be in the zone to which the object track belongs but in an adjacent zone. Since the data recording frequency of this adjacent zone differs from the reference synchronizing frequency that has been set in the drive circuit at 105, it cannot be synchronized within the prescribed time and the track address cannot be read out. At 108, the success or failure of the track address readout at 107 is detected. If it has been successful, at 109 a corrected seek, that is a fine seek, is done after computing the position error between the virtual object track address and the object track address. If a failure is detected at 108, then zone access processing is done from 110 down. At 110, the zone address of the drive circuit is set to the first adjacent zone address based on the zone access precedence determined at 102, and at 111 the reference synchronizing frequency of the drive circuit is set to the data recording frequency in the new zone. At 112 and 113 a track address readout is done again in the same manner as in 107 and 108, and the result is detected. If the readout has been successful, zone access processing ends and said first adjacent zone address becomes the new setting at 119 and at 120 the reference synchronizing frequency of the drive circuit is set to the data recording frequency of this zone. Then, the fine seek starts at 109. When a failure is detected at 113, then at 114 the zone address in the drive circuit is set to the second adjacent zone address determined at 102, and at 115 the reference synchronizing frequency of the drive circuit is set to the data recording frequency of this new zone. At 116 and 117 track address readout is repeated and the result detected. If the reading has been successful, zone access processing ends, at 119 and 120 the second adjacent zone address becomes the new zone setting and the reference synchronizing frequency of the drive circuit is set to the data recording frequency of this new zone. At 109 the fine seek is then started.

Ordinarily, the number of tracks per zone is several hundred and, therefore, the head almost never misses an adjoining zone in a rough seek. If nevertheless the judgement at 117 reveals a failure for both adjoining zones, at 118 a further zone access processing outside of the object zone and the two adjacent zones is done followed by passing through 119 and 120 and finally the fine seek at 109.

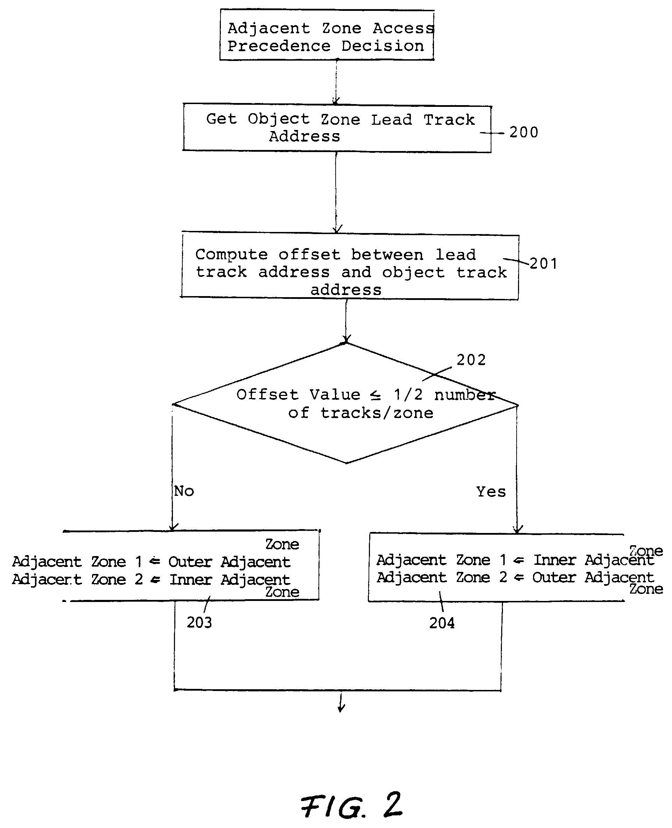

Fig. 2 is a flow chart of an example of the decision process regarding the adjacent zone access precedence. Let us assume a medium in which the track address zero is on the innermost peripheral side of the medium and the track address increases towards the outer periphery. At 200, the lead track address of the object zone to which the object track belongs is obtained. At 201, the offset value between said lead track address and the object track address is computed. For example, when the object track address is assumed to be x1 and the zone lead track address x2, the offset value is obtained as x1-x2. At 202, this offset value is compared with one half of the track number per zone in the medium. When the former is equal to or smaller than the latter, this means that the object track is at a position within the inner half of the object zone. Therefore, in this case, at 204 the inner adjacent zone is chosen to be the first adjacent zone and the outer adjacent zone to be the second adjacent zone. When the offset value is larger than one half of the track number, the object track is positioned in the outer half of the object zone. In this case, the outer adjacent zone is chosen to be the first adjacent zone and the inner adjacent zone the second one at 203. When the object zone is the innermost or outermost zone of the medium, since only one adjacent zone exists, this zone is chosen to be the first adjacent zone.

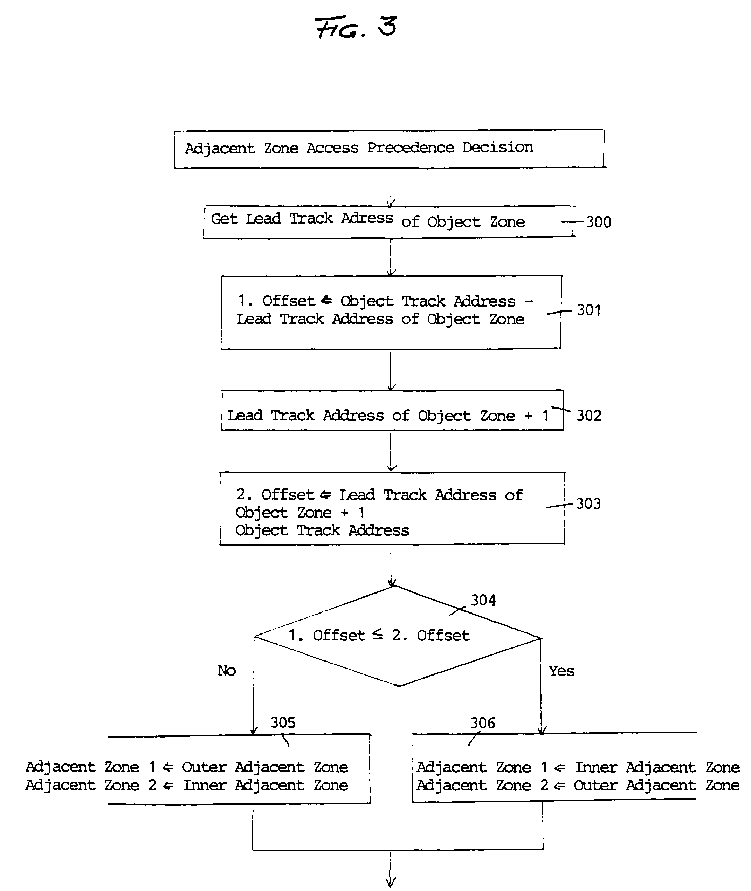

Fig. 3 is a flow chart of another example of the process for determining the adjacent zone access precedence for the embodiment of Fig. 1. This example is based on the same track address layout as it was assumed for the example of Fig. 2. At 300, the lead track address, i.e. the address of the first track of the object zone to which the object track belongs, is obtained. At 301, a first offset value from the lead track address to the object track address is obtained. At 302, the lead track address of the zone which adjoins the outer side of the object zone is determined. The address of this adjacent zone is referred to as "object zone address + 1". At 303, a second offset value from the lead track address of the said adjacent zone to the object track is calculated. At 304, the first and the second offset values are compared. When the former is equal to or smaller than the latter, the inner adjacent zone gets the first adjacent zone access precedence and the outer adjacent zone the second at 306. When the first offset value is greater than the second, the outer adjacent zone is set at adjacent zone access precedence first and the inner adjacent zone second at 305. When the object zone is at the innermost or outermost periphery of the medium, since there is only one adjacent zone, this adjacent zone becomes the adjacent zone access precedence first.

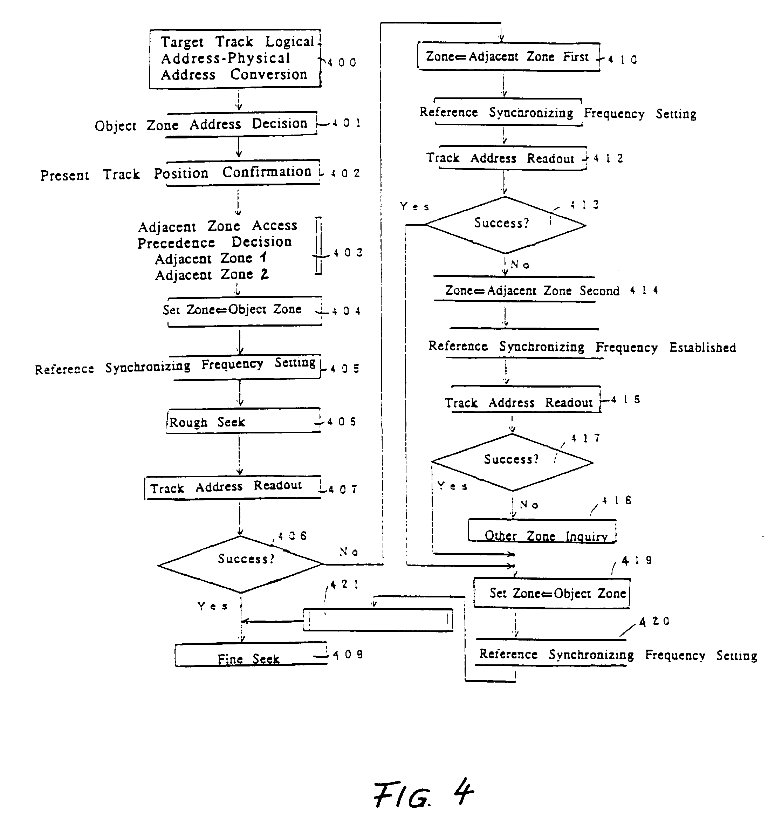

Fig. 4 is a flow chart of an example of the zone access method corresponding to a second embodiment of the invention. At 400, the logical seek or target object address of a command from a host computer is converted to the physical address depending on the optical disk drive apparatus configuration. At 401, the object zone address to which the physical track belongs is obtained. At 402, the track address of the track where the head is presently positioned is read out as a preliminary stage for the rough seek. The difference between the read out track address and the physical track address of the seek destination calculated in the preceding step is now computed to obtain the distance which is needed for the rough seek. At 403, the zone access sequence (precedence) of the outer and inner adjacent zones to the object zone is determined based on the object zone address and the physical track address in a way explained later. At 404, the object zone address is set as the zone address in the drive circuit, and at 405 the reference synchronizing frequency of the drive circuit is switched to the data recording frequency corresponding to the zone address set at 404. At 406, the head does a rough seek to the vicinity of the object track based on the seek distance computed at 402. At 407, the virtual object track address, i.e. the address of the track where the head is positioned after the rough seek is read out as has been explained in detail with respect to the foregoing example. This readout can be successful only if the virtual object track is within the object zone and not one of the adjacent zones. If it is determined at 408, that the track address readout has been successful, the positional error between the virtual object track address and the object track address is computed and the fine seek performed at 409. When a failure is detected at 408, zone access processing is performed starting at 410. At 410, the address of adjacent zone 1 as determined at 403 is set as the zone address in the drive circuit, and at 411 the reference synchronizing frequency of the drive circuit is set to the data recording frequency corresponding to this zone. At 412 and 413 track address readout is done in the same way as at 407 and 408 and the result determined. If the readout has been successful, the zone access processing ends. The original object zone address will become the new zone address setting in the drive circuit at 419, and at 420 the reference synchronizing frequency of the drive circuit is set to the data recording frequency of this object zone. Then, at 421 a history variable is updated based on the result of this zone access procedure as will be described below. Then, at 409 the fine seek is carried out. If a failure is found at 413, the address of adjacent zone 2 as determined at 403 becomes the zone address setting of the drive circuit at 414, and at 415 the reference synchronizing frequency of the drive circuit is set to the data recording frequency of this new zone. At 416 and 417, track address readout is done and the result detected as mentioned before. If the readout is judged to be successful, the zone access processing ends and steps 419, 420 and 421 are performed as mentioned before. If, however, it is found at 417 that the track address readout failed, then at 418 a further zone access processing for zones other than the object zone and the two adjacent zones is done prior to passing through 419, 420 and 421 and the fine seek at 409. In this case, the history variable update at 421 is not done.

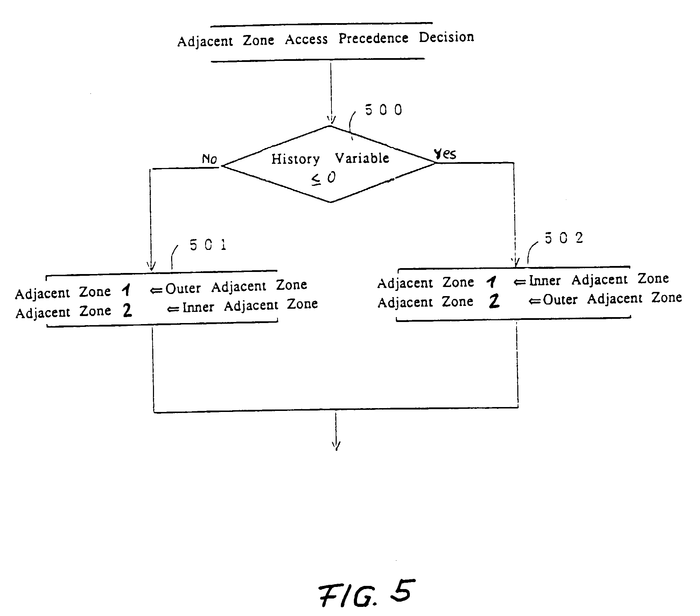

Fig. 5 is a flow chart of an example of the adjacent zone access precedence processing in the embodiment of Fig. 4. In this example, the more positive the history variable is, the stronger the likelihood that the virtual object track is in the outer adjacent zone of the object zone and the more negative the history variable is, the stronger the likelihood that the virtual object track is in the inner adjacent zone of the object zone. At 500, the history variable is compared with zero to investigate the tendency of the past zone access processing results. When the history variable is positive, then at 501 the outer adjacent zone becomes the adjacent zone 1 and the inner adjacent zone the adjacent zone 2. By contrast, if the history variable is negative or zero, then at 502 the inner adjacent zone becomes the adjacent zone 1 and the outer adjacent zone the adjacent zone 2.

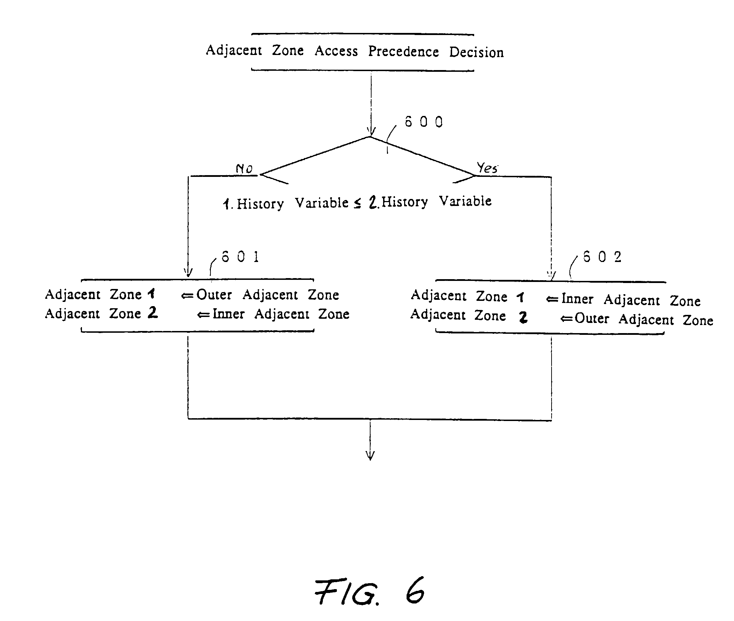

Fig. 6 is a flow chart of another example of the adjacent zone access precedence process for the embodiment of Fig. 4. In this example, there are two history variables, the first indicating the number of times that the virtual object track was in the outer adjacent zone and the second indicating the number of times it was in the inner adjacent zone. At 600, the first and second history variables are compared. If the first history variable is larger than the second, then at 601 the outer adjacent zone becomes the adjacent zone 1 and the inner adjacent zone the adjacent zone 2. If at 600 the first history variable is equal to or smaller than the second, then at 602 the inner adjacent zone becomes the adjacent zone 1 and the outer adjacent zone the adjacent zone 2.

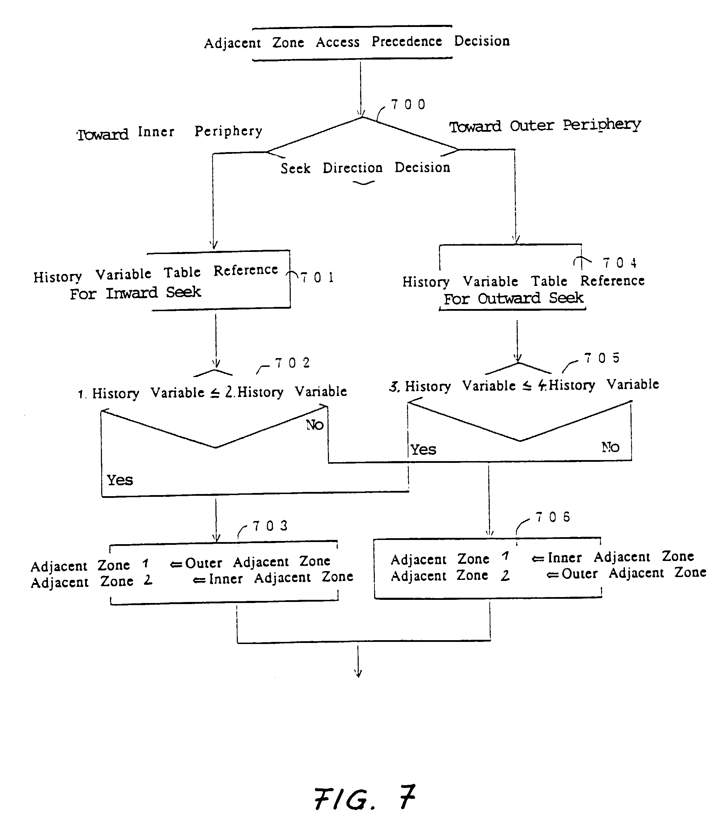

Fig. 7 is a flow chart of still another example of the adjacent zone access precedence process for the embodiment of Fig. 4. In this case there are four history variables, the first and second respectively indicating the number of times the virtual object track was in the inner or the outer adjacent zone of the object zone after inward seeks and the third and fourth history variables respectively indicating the number of times the virtual track was in the inner or the outer adjacent zone of the object zone after outward seeks. At 700, a decision is made whether the seek was from the inner periphery of the medium toward the outer periphery or opposite. This may be done by comparing the present track address and the address of the object track. If an inward seek is found at 700, then at 701 a history variable table for inward seek is referenced and at 702 the first and the second history variables are compared. When the first history variable is larger than the second, then at 703 the outer adjacent zone becomes the adjacent zone 1 and the inner adjacent zone the adjacent zone 2. If the first history variable is equal to or smaller than the second, at 706 the inner adjacent zone becomes the adjacent zone 1 and the outer adjacent zone the adjacent zone 2.

When an outward seek is found at 700, then at 704 a history variable table for outward seek is referenced and at 705 the third and the fourth history variables are compared. If the third history variable is larger than the fourth, then at 703 the outer adjacent zone becomes the adjacent zone 1 and the inner adjacent zone the adjacent zone 2. If the third history variable is equal to or smaller than the fourth, then at 706 the inner adjacent zone becomes the adjacent zone 1 and the outer adjacent zone the adjacent zone 2.

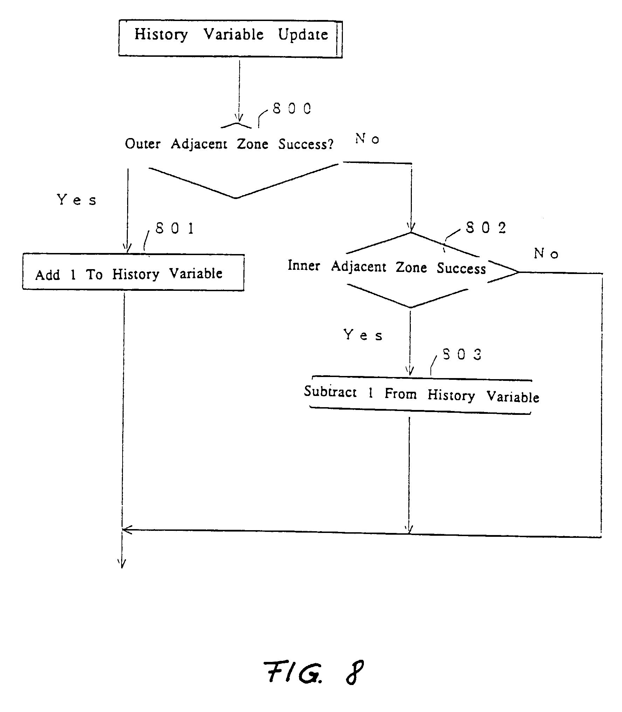

Fig. 8 is a flow chart of an example of the history variable update processing for the embodiment of Fig. 4. This is an update processing for the adjacent zone access precedence decision process explained with respect to Fig. 5. In Fig. 8, at 800 it is determined whether the track address reading was successful when the drive circuit was set to the outer adjacent zone address and the reference synchronizing frequency of the drive circuit to the data recording frequency corresponding to the outer adjacent zone. When success is determined at 800, then at 801 the history variable is incremented by 1. If the decision at 800 reveals a failure, then at 802 it is determined whether the track address reading was successful when the drive circuit was set to the inner adjacent zone address and the reference synchronizing frequency corresponding to it. When success is determined at 802, the history variable is decremented by 1. When 802 indicates a failure, it means that the virtual object track was neither in the outer adjacent zone nor in the inner adjacent zone and no updating of the history variable is done.

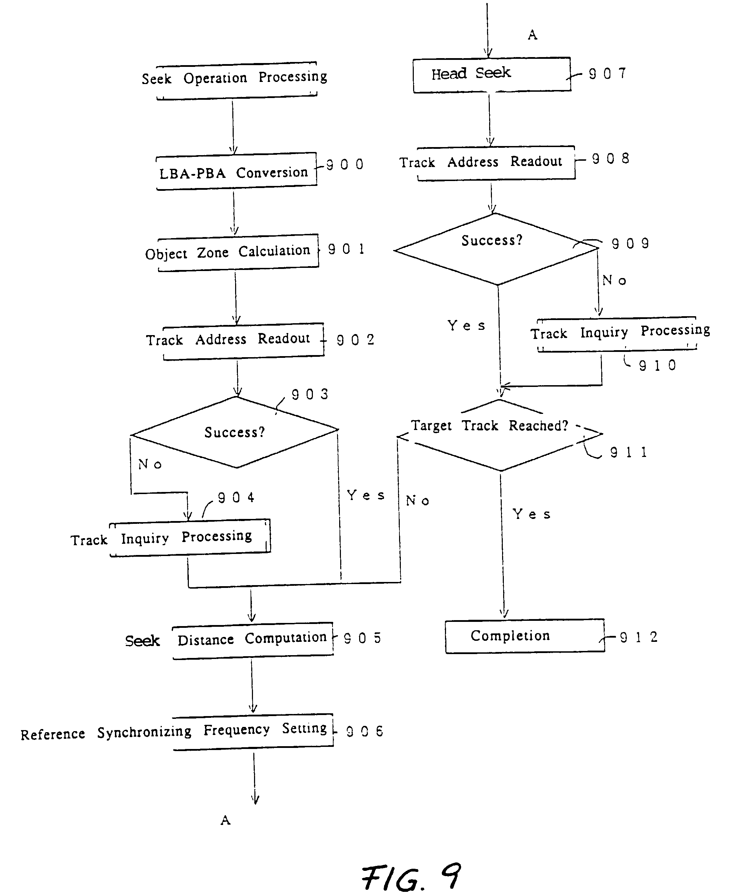

Fig. 9 is a head seek flow chart for an optical disk drive apparatus using the zone access method according to a third embodiment of the invention. At 900, the logical address of the seek destination sector sent from a host computer is converted to the physical address depending on the optical disk drive configuration. At 901, the object zone address to which the physical track address belongs is obtained from said physical track address. At 902, the track address where the head is presently positioned is read out as a preliminary stage for the seek, and at 903 the result of this readout operation is judged. If the readout has been successful, then at 905 the head seek distance needed for the seek is obtained. If the readout was not successful, then at 904 a track inquiry processing is done as will be described below. Major reasons of a failure at this stage are external shocks or vibrations the optical disk drive apparatus is subjected to that cause the head to inadvertently move to another zone. In such case the data recording frequency of the zone and the reference synchronizing frequency of the drive circuit do not match. At 904, the zone in which the head is presently positioned is found by switching the reference synchronizing frequency of the drive circuit until it corresponds to the data recording frequency of the present zone and the track address readout is successful. At 906, the reference synchronizing frequency of the drive circuit is set to the data recording frequency of the object zone determined in 901. At 907, the head is actually moved. At 908 the address of the track on which the head is positioned after the seek is read out, and at 909 the result of the readout operation is judged. If, after the seek the head has entered a zone that is not the object zone, the data recording frequency of such adjacent zone will differ from the reference synchronizing frequency set at 906 so that the track address cannot be read out. If the readout is judged to be successful at 909, then at 911 the virtual object track address is compared with the object track address and, if they coincide, the process ends at 912. If these addresses do not coincide, the positional error between the object track address and the virtual object track address is computed and the seek repeated. If the readout operation turns out to be unsuccessful at 909, then at 910 a track inquiry processing is done in the same manner as at 904, the track is read out and the process goes to step 911.

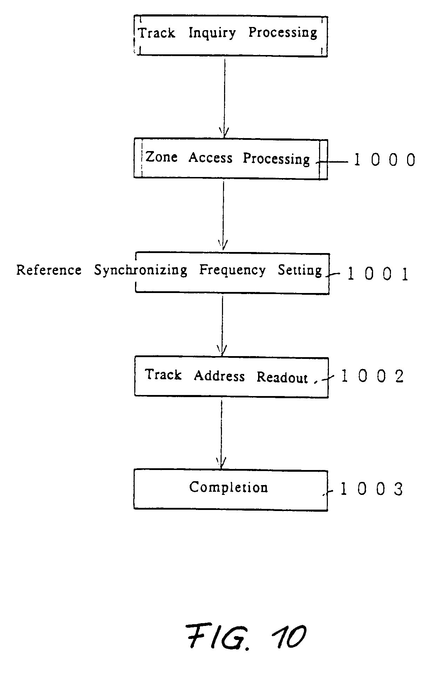

Fig. 10 is a flow chart of the track inquiry processing of step 904 in Fig. 9. In this Figure, 1000 is a zone access processing. At 1001, the reference synchronizing frequency of the drive circuit is set based on the result of the zone access processing and at 1002, the track address readout operation is done.

As will be clear from the foregoing explanation, the zone access method according to the present invention utilizes circumstantial information when zone miss phenomena occur and by that is capable of finding the zone in which the head is presently positioned and deciding the required reference synchronizing frequency in a short time and reliable manner. The present invention can be realized just by modifying the firmware in the drive apparatus there being no need to change the format of the media or to make substantial modifications in the drive circuit. Thus, the present invention carries out zone access processing simply and efficiently, preventing a decrease in the response speed of the optical disk drive apparatus to a host computer and its effect is immense.

## Claims

1. A zone access method in an optical disk drive apparatus in which a disk-type optical or optical-magnetic recording medium is partitioned into plural concentric circular zones a different data recording frequency being used in each of said zones, wherein during a seek operation to move a data read/write head to a given object track in a given object zone a reference synchronizing frequency of a drive circuit of the optical disk drive apparatus is set to a predetermined value corresponding to the data recording frequency of the object zone, characterized in that
when after the seek operation the head has not been positioned in the object zone, the reference synchronizing frequency of the drive circuit is switched to values of the data recording frequency in other zones until it matches the data recording frequency of the zone where the head has actually been positioned,
wherein the reference synchronizing frequency is switched in sequence to
a) the data recording frequency of that zone that among the plural zones adjacent to the object zone, is at the nearest distance from the object track, and
b) the data recording frequency of that of the plural adjacent zones that is at the farthest distance from the object track.

2. A zone access method in an optical disk drive apparatus in which a disk-type optical or optical-magnetic recording medium is partitioned into plural concentric circular zones a different data recording frequency being used in each of said zones, wherein during a seek operation to move a data read/write head to a given object track in a given object zone a reference synchronizing frequency of a drive circuit of the optical disk drive apparatus is set to a predetermined value corresponding to the data recording frequency of the object zone, characterized in that
when after the seek operation the head has not been positioned in the object zone, the reference synchronizing frequency of the drive circuit is switched to the values of the data recording frequency in other zones until it matches the data recording frequency of the zone where the head has actually been positioned,
wherein the reference synchronizing frequency is switched to the data recording frequency of a zone determined on the basis of history information on zone miss phenomena, said information being stored in the disk drive apparatus, and the history information is updated depending on whether or not the thus selected reference synchronizing frequency matches the data recording frequency of the zone where the head has actually been positioned.

3. A zone access method according to claim 2, wherein
a) the direction in which the head had been moved is determined,
b) depending on the thus determined direction first or second history information on zone miss phenomena is selected, the information being stored in the disk drive apparatus,
c) the reference synchronizing frequency is switched to the data recording frequency of a zone determined on the basis of the selected history information, and
d) the history information is updated depending on whether or not the thus selected reference synchronizing frequency matches the data recording frequency of the zone where the head has actually been positioned.

## Patentansprüche

1. Zonenzugriffsverfahren in einem optischen Plattenlaufwerk, in welchem ein plattenartiges optisches oder opto-magnetisches Aufzeichnungsmedium in mehrere konzentrische kreisförmige Zonen partitioniert ist, wobei eine unterschiedliche Datenaufzeichnungsfrequenz für jede der Zonen verwendet wird, bei dem während einer Suchoperation zum Bewegen eines Daten-Lese/Schreibkopfs zu einer gegebenen Zielspur in einer gegebenen Zielzone eine Referenzsychnonisationsfrequenz einer Treiberschaltung des optischen Plattenlaufwerks auf einen vorbestimmten Wert eingestellt ist, der der Datenaufzeichnungsfrequenz der Zielzone entspricht,
dadurch gekennzeichnet, daß
die Referenzsynchronisationsfrequenz der Treiberschaltung, wenn nach der Suchoperation der Kopf nicht in der Zielzone positioniert wurde, auf Werte der Datenaufzeichnungsfrequenz in anderen Zonen umgeschaltet wird, bis sie zu der Datenaufzeichnungsfrequenz der Zone paßt, in der der Kopf tatsächlich positioniert worden ist,
wobei die Referenzsynchronisationsfrequenz nacheinander umgeschaltet wird auf
a) die Datenaufzeichnungsfrequenz derjenigen Zone, die sich unter den mehreren der Zielzone benachbarten Zonen in der kürzesten Entfernung von der Zielspur befindet, und
b) die Datenaufzeichnungsfrequenz derjenigen der mehreren benachbarten Zonen, die sich in der größten Entfernung von der Zielspur befindet.

2. Zonenzugriffsverfahren in einem optischen Plattenlaufwerk, bei welchem ein plattenartiges optisches oder opto-magnetisches Aufzeichnungsmedium in mehrere konzentrische kreisförmige Zonen partitioniert ist, wobei eine unterschiedliche Datenaufzeichnungsfrequenz für jede der Zonen verwendet wird, bei dem während einer Suchoperation zum Bewegen eines Daten-Lese/Schreibkopfs zu einer gegebenen Zielspur in einer gegebenen Zielzone eine Referenzsychnonisationsfrequenz einer Treiberschaltung des optischen Plattenlaufwerks auf einen vorbestimmten Wert eingestellt ist, der der Datenaufzeichnungsfrequenz der Zielzone entspricht,
dadurch gekennzeichnet, daß
die Referenzsynchronisationsfrequenz der Treiberschaltung, wenn nach der Suchoperation der Kopf nicht in der Zielzone positioniert wurde, auf die Werte der Datenaufzeichnungsfrequenz in anderen Zonen umgeschaltet wird, bis sie zu der Datenaufzeichnungsfrequenz der Zone paßt, in der der Kopf tatsächlich positioniert worden ist,
wobei die Referenzsynchronisationsfrequenz auf die Datenaufzeichnungsfrequenz einer Zone umgeschaltet wird, die auf der Grundlage von History-lnformation über Zonenpositionierungsfehler bestimmt wurde, wobei diese Information in dem Plattenlaufwerk gespeichert ist, und die History-lnformation in Abhängigkeit davon aktualisiert wird, ob die derart ausgewählte Referenzsynchronisationsfrequenz zu der Datenaufzeichnungsfrequenz der Zone paßt, in der der Kopf tatsächlich positioniert worden ist.

3. Zonenzugriffsverfahren nach Anspruch 2, bei dem
a) die Richtung bestimmt wird, in die der Kopf bewegt worden war,
b) in Abhängigkeit von der derart bestimmten Richtung eine erste oder zweite History-lnformation über Zonenpositionierungsfehler ausgewählt wird, wobei die Information in dem Plattenlaufwerk gespeichert ist,
c) die Referenzsynchronisationsfrequenz auf die Datenaufzeichnungsfrequenz einer Zone umgeschaltet wird, die auf der Grundlage der ausgewählten History-lnformation ausgewählt wurde, und
d) die History-lnformation in Abhängigkeit davon aktualisiert wird, ob die derart ausgewählte Referenzsynchronisationsfrequenz zu der Datenaufzeichnungsfrequenz der Zone paßt, in der der Kopf tatsächlich positioniert worden ist.

## Revendications

1. Procédé d'accès aux zones dans une unité de disque optique dans lequel un support d'enregistrement optique ou magnéto-optique sous forme de disque est subdivisé en de multiples zones circulaires concentriques, une fréquence différente d'enregistrement des données étant utilisée dans chacune desdites zones, dans lequel lors d'une opération de positionnement consistant à déplacer une tête de lecture/écriture de données vers une piste cible donnée dans une zone cible donnée une fréquence de synchronisation de référence d'un circuit de commande de l'unité de disque optique est fixée à une valeur prédéterminée correspondant à la fréquence d'enregistrement des données de la zone cible,
caractérisé en ce que
lorsqu'après l'opération de positionnement la tête n'a pas été positionnée dans la zone cible, la fréquence de synchronisation de référence du circuit de commande est changée à des valeurs de fréquence d'enregistrement de données d'autres zones jusqu'à ce qu'elle corresponde à la fréquence d'enregistrement de données de la zone où la tête a été réellement positionnée,
dans lequel la fréquence de synchronisation de référence est changée successivement à
a) la fréquence d'enregistrement de données de la zone qui, parmi les multiples zones adjacentes à la zone cible, est à la distance la plus courte de la piste cible, et
b) la fréquence d'enregistrement de données de celle des multiples zones adjacentes qui est à la distance la plus grande de la piste cible.

2. Procédé d'accès aux zones dans une unité de disque optique dans lequel un support d'enregistrement optique ou magnéto-optique sous forme de disque est subdivisé en de multiples zones circulaires concentriques, une fréquence différente d'enregistrement des données étant utilisée dans chacune desdites zones, dans lequel lors d'une opération de positionnement consistant à déplacer une tête de lecture/écriture de données vers une piste cible donnée dans une zone cible donnée une fréquence de synchronisation de référence d'un circuit de commande de l'unité de disque optique est fixée à une valeur prédéterminée correspondant à la fréquence d'enregistrement des données de la zone cible,
caractérisé en ce que
lorsqu'après l'opération de positionnement la tête n'a pas été positionnée dans la zone cible, la fréquence de synchronisation de référence du circuit de commande est changée à des valeurs de fréquence d'enregistrement de données d'autres zones jusqu'à ce qu'elle corresponde à la fréquence d'enregistrement de données de la zone où la tête a été réellement positionnée,
dans lequel la fréquence de synchronisation de référence est changée à la fréquence d'enregistrement de données d'une zone déterminée sur la base d'informations d'historique de phénomènes de manqués de zone, lesdites informations étant stockées dans l'unité de disque, et les informations d'historique sont mises à jour suivant que la fréquence de synchronisation de référence ainsi sélectionnée correspond ou ne correspond pas à la fréquence d'enregistrement de données de la zone dans laquelle la tête a été réellement positionnée.

3. Procédé d'accès aux zones selon la revendication 2, dans lequel
a) la direction dans laquelle la tête avait été déplacée est déterminée,
b) en fonction de la direction ainsi déterminée une première ou une seconde information d'historique de phénomènes de manqués de zone est sélectionnée, l'information étant stockée dans l'unité de disque,
c) la fréquence de synchronisation de référence est changée à la fréquence d'enregistrement de données d'une zone déterminée d'après l'information d'historique sélectionnée, et
d) l'information d'historique est mise à jour suivant que la fréquence de synchronisation de référence ainsi sélectionnée correspond ou ne correspond pas à la fréquence d'enregistrement de données de la zone dans laquelle la tête a été réellement positionnée.
